# EUROPEAN PATENT APPLICATION

(11) **EP 4 617 545 A1**
(43) Date of publication of application: **17.09.2025**
(21) Application number: 25160145.6
(22) Date of filing: 26.02.2025
(51) Int. Cl.: F16L 37/22, F16L 37/34

(54) **IMPROVED MALE FLUID CONNECTOR FOR A QUICK CONNECTING AND DISCONNECTING FLUID COUPLING**

(30) Priority: 14.03.2024 IN 202411018475; 14.03.2024 IN 202411018474; 14.03.2024 IN 202411018473; 25.04.2024 DE 102024111733; 25.04.2024 DE 102024111735; 25.04.2024 DE 102024111734
(71) Applicant: Danfoss A/S, 6430 Nordborg (DK)
(72) Inventor: SHENDE, Amit, 411017 Pune (IN); KUMAR, Pradeep, 411013 Pune (IN); LAFOND, Sébastien, 7420 Habère Lullin (FR)
(74) Representative: Nestler, Jan Hendrik

(57) **Abstract**

The invention relates to a male fluid connector (3) for a quick connecting and disconnecting fluid coupling (1).

The male fluid connector (3) comprises:
a housing (15) with at least an axially arranged section that is designed and
arranged to be received by an axially arranged inner recess (5) of the female fluid connector (2) of the quick connecting and disconnecting fluid coupling (1);
a contact pressure surface (16) that is arranged at an angle with respect to the axial direction (7) of the axially arranged section of the housing (15) of the male fluid connector, and that is designed and arranged to be engaged behind by a latching member (13) of the female fluid connector (2) in a latching position (Fig. 2) so as to reversibly fixate the male fluid connector (3) inside the female fluid connector (2) of the quick connecting and disconnecting fluid coupling (1).

It is suggested that the angle (β) that is enclosed by the direction of the contact pressure surface (16) and the axial direction (7) is smaller than 44.5°, preferably smaller than 44°.

## Description

The invention relates to a male fluid connector for a quick connecting and disconnecting fluid coupling. The invention further relates to a quick connecting and disconnecting fluid coupling.

Fluid connections have to be made in a plethora of technical applications. They are needed whenever fluids have to be transported between different devices or parts of a device using tubes and hoses. Namely, they are provided at the interface between the respective device and the respective tube/hoses.

Depending on the application in question, certain requirements are to be fulfilled. Depending on those requirements, various designs have evolved in the prior art.

Just to name some examples: the fluid in question might be gaseous or liquidous (where a wide variety of viscosities may be encountered). Furthermore, the temperature levels and the pressure levels in question might vary considerably between different applications.

Depending on the application, a more or less frequent connection and disconnection of the device and the tube/hose may be required. As an example, if a fluid connection has to be established/opened only very rarely, the typical choice will usually be a threaded connection using a threaded nut that is screwed onto a threaded flange to attach a tube/hose to a device. However, in case a fluid connection has to be established/opened somewhat more frequently, or in case the available space is very limited, quick connecting/disconnecting connectors are usually preferred, albeit they are as such more costly as compared to a threaded nut connection.

Furthermore, for a lot of applications, it is preferred that the fluid connectors shut off the fluid flow through the connector automatically (fluid shut-off system), so that no fluid spill occurs if the connector is disconnected. Thus, a fluid spill is avoided without any additional manual handling, when the fluid coupling is connected or disconnected.

In case of quick connecting/disconnecting fluid couplings, various aspects have to be considered as well. In particular, the forces and pressures that can be handled by the quick connecting/disconnecting fluid couplings are of course a major parameter. Furthermore, to facilitate the use of the quick connecting/disconnecting fluid coupling, the forces that are required to plug the quick connecting/disconnecting coupling together, as well as the force that is required to pull them apart, is a parameter that is to be considered. While the required forces should not be too low, so as to avoid an unintended disconnection of the coupling, and in order to allow a reasonable pressure level of the fluid inside the coupling, too excessive forces should be avoided as well, so that a fast and comfortable connection and disconnection of the coupling can be effectuated. In this respect it has to be noted that during maintenance, frequently a significant number of fluid connections have to be established or separated. The repetitive nature of the task will cause a significant fatigue and even health risk for a mechanic if the connecting/disconnecting forces are too high.

Just to name one example of a large scope of different possibilities: power electronics and electronic components in data centres do produce a significant amount of waste heat that has to be removed from the system in order to avoid overheating. Therefore, in the meantime fluid cooling, using water or a similar cooling agent, is used for such systems. Typical pressures that are occurring lie in the order of two or three bars. Therefore, typically a design pressure of 5 bars is realised. For typical quick connecting and disconnecting fluid couplings, as they are known in the prior art (for example Danfoss Hansen ^{®} quick disconnect coupling from the UQD-series, in particular series UQD02, UQD04, UQD06 and UQD08 at the date of the filing of the priority application) do require a disconnecting force in the order of 50 N. It is easily understandable that a repetitive disconnection of several hundred connectors at 50 Newton when disconnecting a complete computer rack for performing maintenance or upgrades will become very annoying and fatiguing for the mechanic.

Therefore, there is a need for quick connecting and disconnecting fluid couplings that are requiring less force for connection and/or disconnection, while not introducing (significant) disadvantages.

It is therefore an object of the invention to propose a male fluid connector of a quick connecting and disconnecting fluid coupling that is improved over male fluid connectors of quick connecting and disconnecting fluid couplings as they are known in the state of the art.

It is another object of the invention to propose a quick connecting and disconnecting fluid coupling that is improved over quick connecting and disconnecting fluid couplings that are known in the prior art.

A male fluid connector according to claim 1 solves this object. Further, a quick connecting and disconnecting fluid coupling according to claim 8 solves this object.

A male fluid connector for a quick connecting and disconnecting fluid coupling is suggested, wherein the female fluid connector comprises:
a contact pressure surface that is arranged at an angle with respect to the axial direction of the axially arranged section of the housing of the male fluid connector, and that is designed and arranged to be engaged behind by a latching member of the female fluid connector in a latching position so as to reversibly fixate the male fluid connector inside the female fluid connector of the quick connecting and disconnecting fluid coupling.

It is further suggested that the angle that is enclosed by the direction of the contact pressure surface and the axial direction is smaller than 44.5°, preferably smaller than 44°.

The male fluid connector is intended to be connected to a corresponding female fluid connector, completing the coupled state of the quick connecting and disconnecting fluid coupling. This will be done by a pushing-together movement of the female fluid connector and the male fluid connector. A certain force may have to be overcome to reach this coupled position. In the coupled position, (at least) parts of the housing of the male fluid connector will lie within an inner recess of the female fluid connector (lie within an inner recess of the housing of the female fluid connector). In the coupled position, a latching member of the female fluid connector will exert a force onto the contact pressure surface of the male fluid connector. To reach this coupled position, the latching member will usually be pushed out of the way by sections of the housing of the male fluid connector that are lying in front of the contact pressure surface when seen in the axial direction during a closing movement of the quick connecting and disconnecting fluid coupling (in particular by an inclined surface of a protruding part of the male fluid connector, as explained in more detail in the following). Then, in a certain position, the latching member will sort of snap fit into a latching position, contacting the contact pressure surface to hold the male fluid connector and the female fluid connector of the quick connecting and disconnecting fluid coupling together. The movement into the snap-fit position may be effectuated by a mechanical biasing of the latching member. Additionally or alternatively, this movement may be realised by a mechanical contact with a guiding member, in particular by (one of the side surfaces of) a guiding slot (as will be described in more detail later). In addition, the latching pin will usually be moved away/aside by the contact pressure surface of the male fluid connector, when the male fluid connector and the female fluid connector are to be disconnected. While it is possible to provide some means for aiding a movement of the latching pin aside, it is possible - and possibly even preferred - if this movement is essentially only induced due to the inclined surface of the contact pressure surface. This will be elucidated further below. Irrespective of this design details, so-to-say, the connection of the quick connecting and disconnecting fluid coupling will be effectuated in part by a force fit connection and in part by positive form fit connection, where the two connection principles may work advantageously together.

Of course, the dimensions of the various parts of the quick connecting and disconnecting fluid coupling, in particular the size of the recess of the female fluid connector and the parts of the male fluid connector that will be contained inside of the recess of the female fluid connector in the coupled state of the quick connecting and disconnecting fluid coupling (protruding parts of the male fluid connector) have to be appropriately arranged and dimensioned. Certainly, it is possible to provide one or a plurality of sealing members (for example O-rings or the like, where as a material rubber or silicone may be chosen), so that no fluid may leak out of the coupled quick connecting and disconnecting fluid coupling. How to achieve this is well known to a person skilled in the art.

When the male fluid connector and the female fluid connector of the quick connecting and disconnecting fluid coupling have to be separated, a simple pulling apart force may be applied (i.e. a force / counteracting forces that may be applied to the female fluid connector/the male fluid connector/the quick connecting and disconnecting fluid coupling). This is particularly the case, when a pulling force is applied onto the cover member of the female fluid connector. Under the influence of the disconnecting force, the holding force of the latching member will eventually be overcome, and the latching member will move in a way to clear the passage for the respective parts of the male fluid connector, in particular for the contact pressure surface of the male fluid connector. However, it is also possible to effectuate a separation of the male fluid connector and the female fluid connector by first pushing the male fluid connector and the female fluid connector together (for example by applying a pushing force onto the female fluid connector, pushing the female fluid connector onto the (fixedly mounted) male fluid connector), and by consequently (second step) applying a pulling force, pulling the female fluid connector and the male fluid connector apart (for example by applying a pulling force onto the cover member of the female fluid connector). This way, a guiding slot that may be provided in the female fluid connector (as described in more detail below) may aid in mechanically displacing the latching member in a way that a decoupling movement of the female fluid connector and the male fluid connector may become easier (in particular requiring a smaller pulling force for realising the separation of the female fluid connector and the male fluid connector).

The movement of at least one of the at least one latching pin towards a position that will allow a coupling and/or a decoupling of the female fluid connector and the male fluid connector (position where the path for the respective parts is cleared; widened position of the latching pin; radially outward position of the latching pin) may preferably be effectuated essentially only by mechanical contact with a respective (inclined) surface of the corresponding connector part, in particular of the corresponding male fluid connector part. This may relate to the contact pressure surface. Additionally or alternatively, it may relate to an oppositely arranged inclined surface of a bulged part of the corresponding fluid connector part, when seen in an axial direction. This design may be particularly advantageous in that it is not necessary to grasp a special part of the respective coupling member to effectuate an opening and/or closing movement of the coupling. In other words, the respective coupling part may be grasped at essentially any point. This may prove to be particularly valuable when the fluid coupling is used in very narrow surroundings.

However, it is also possible to provide a design, where an opening movement of at least one of the at least one latching pins is effectuated, aided or facilitated by a movable member, for example by a sleeve-like part that is movable in the axial direction of the female fluid connector, and that shows protrusions for mechanical contact with (possibly only some of) the latching pins.

As it is known in the prior art, the contact pressure surface of the male fluid connector is arranged at an angle with the axial direction of the male fluid connector/the quick connecting and disconnecting fluid coupling/the female fluid connector. So far, an angle of 45° was chosen, which was derived on the basis of general physics. At this very angle, according to the paradigm that was around the state-of-the-art, a quick connecting and disconnecting effect by simply applying a pushing/pulling force can be realised, while still being able to guarantee a sufficient resilience against an inadvertent disconnection. Further, it was absolutely standard practice that the angle of the contact pressure surface and the angle for the direction the latching member may move (which will be elucidated in more detail in the following) were chosen to be identical.

Presently, however, it is suggested to differ from this paradigmatic 45° angle. In particular, it is suggested to use an angle for the contact pressure surface (angle enclosed by the direction of the contact pressure surface and the axial direction of the male fluid connector), that is smaller than 44.5°, preferably smaller than 44°. However, different (upper limits) for the angle can be chosen as well, like 43.5°, 43°, 42.5°, 42°, 41°, 40°, 39°, 38°, 37°, 36° or 35°. While this somewhat minuscule variation of the angle seems to be useless, both for a person skilled in the art and for a non-technician alike, the inventors have surprisingly figured out that the force that is required for pulling apart the female fluid connector and the male fluid connector of the quick connecting and disconnecting coupling can be significantly reduced, typically on the order of at least 25%, in typical setups even usually around 35% to 40% according to first experiments (pulling force in case of "pulling only movement"; pushing and/or pulling force in case of a "pushing and pulling movement"). This is an order of magnitude of reduction of the pulling force that is absolutely not to be expected. Right at the same time, first measurements show that the resilience towards an inadvertent disconnection of the quick connecting and disconnecting coupling due to vibrations is essentially unaffected (albeit a reduction of the resilience in the order of less than 5% was found in the mentioned first experiments).

Further, it is suggested to design the male fluid connector in a way that the angle that is enclosed by the direction of the contact pressure surface and the axial direction is larger than 30°, preferably larger than 35°, more preferred larger than 40°, even more preferred larger than 43°. Again, different (lower limits for the) angles can be used as well, like 31°, 32°, 33°, 34°, 36°, 37°, 38°, 39°, 41°, 42°, 42.5° or 43.5°. First experiments indicate that too large angles will result in an unstable connection of the quick connecting and disconnecting fluid coupling. In particular, vibrations may then lead to an inadvertent disconnection of the quick connecting and disconnecting fluid coupling, which is of course not desired. Using (one of) the upper limits, this can be avoided, while still providing a good reduction in the force that is necessary for disconnecting the female fluid connector and the male fluid connector of the quick connecting and disconnecting fluid coupling.

Further, it is possible that the male fluid connector is designed and arranged in a way that the contact pressure surface is provided by a bulged part of the housing. Even further, the bulged part may further comprise an inclined surface opposite of the contact pressure surface. The bulged part may be provided in any sensible way. As an example, the bulged part may be realised by a deformation of the housing of the male fluid connector. This will typically result in a corresponding recess on the inner side of the wall of the housing of the male fluid connector. For this, essentially all known material deformation processes can be used. Further, material removal techniques might be used, for example by starting with a solid block of material/a tube with a thick wall, and applying turning techniques for material removal. However, it is also possible that the bulged part is provided by additional material. This way, the bulged part can be provided as a solid piece of material. Such a housing may be produced by additive material machining techniques. As an example, additional material may be applied by soldering some additional material to the outside of the housing of the male fluid connector. The bulged part may not only comprise a contact pressure surface (on one side thereof, as seen in the axial direction). Instead, the bulged part may also comprise an inclined surface, in particular on the opposing side of the side where the contact pressure surface is provided. It is to be noted that the angle of the inclined surface may differ, even significantly, as compared to the angle of the contact pressure surface. This is because for the inclined surface, it is not necessary that a holding force may be created to hold the quick connecting and disconnecting fluid coupling together. Rather, typically it is desired to use a smaller angle compared to the contact pressure surface (for example angles may be in the region between 20°, 25° or 30° to 30°, 35° or 40°. This way the force that is necessary to couple the female fluid connector and the male fluid connector together may be advantageously reduced. Even further, it is posable that a so-to-say flat circumferential surface is provided (i.e. a surface that is parallel to the axial direction), in particular between the contact pressure surface and an inclined surface. This way, the respective section of the male fluid connector typically becomes less prone to damages due to external influences.

In particular, it is suggested to design the male fluid connector in a way that it is designed and arranged to couple to a standard female fluid connector comprising a latching member, preferably a latching pin that is guided by a guiding slot, wherein the guiding slot is arranged at a 45° angle. This way, the male fluid connector can be advantageously used in combination with standard female connectors as they are known in the prior art. This significantly enhances the universal applicability, and therefore the acceptance of the presently suggested male fluid connector. Indeed, present installations can continued to be used. Nevertheless, by using the presently suggested male fluid connector, an enhanced functionality of the fluid connection/the quick connecting and disconnecting fluid coupling can be realised.

When talking about a standard female fluid connector, this may essentially be interpreted in a way that it is a female fluid connector that is known in the prior art (i.e. that is not designed according to the presently disclosed proposition and/or it is not especially adapted to work together with a male fluid connector of the presently proposed male fluid connector type. More particularly, it may relate to a female fluid connector comprising a 45° angle. Even further, the "standard" in "standard female fluid connector" may even be omitted.

As mentioned, the latching member of the female fluid connector may be provided as a latching pin, preferably as a plurality of latching pins. Furthermore, the latching member and/or the latching pin may be provided in form of a device with a distinct extent in a longitudinal direction. As an example, some kind of a pole, rod or some kind of a very stiff wire may be used for this. However, it is also possible to use different designs for one, a plurality or all of the latching pins used.

As already mentioned, the latching pin has to be able to move in a way that the male fluid connector can be inserted into the female fluid connector, or can be removed out of the female fluid connector. In principle, in the fully connected state and in the fully disconnected state, the latching pin may be in a first, inward position, while it will be in a second, outward position during the connection/disconnection process of the quick connecting and disconnecting fluid coupling (where of course transient positions may be present as well). The first, inward position for the latching pin may be the same for both the fully connected position and the fully disconnected position; however, it is also possible that the inward positions will differ somewhat for the fully connected position and the fully disconnected position of the quick connecting and disconnecting fluid coupling. In the first, inner latching position (in particular, when the male fluid connector is fully inserted into the female fluid connector - in other words, if the quick connecting and disconnecting fluid coupling is fully closed/coupled - usually, the latching member(s) will contact the contact pressure surface with a certain contacting pressure; but additionally and/or alternatively also in a fully disconnected position of the quick connecting and disconnecting fluid coupling), the latching pin is typically positioned in a way that (approximately/essentially) half of the height (thickness/diameter) of the latching pin protrudes into the recess of the housing of the female fluid connector, while (approximately/essentially) half of the height of the latching pin lies within (line of sight position) the housing of the female fluid connector. For this, a movement limiting means for the latching pin may provided. Typically, a mechanical end stop may be used. This may be realised by an appropriate dimensioning of the guiding slot. Additionally, the guiding slot may also help in displacing the latching member in a way that a separation of the female fluid connector and the male fluid connector becomes easier, in case the male fluid connector and the female fluid connector are to be disconnected using a "pushing and pulling movement" (in particular by virtue of a first pushing movement, where a mechanical contact of one side of the guiding slot with the latching member may guide the latching member in a direction that is directed outward in radial direction).

The direction of movement of the latching pin is not free, but instead it will be directed by the guiding slot. The guiding slot will guide the latching pin along a defined longitudinal direction, therefore allowing a longitudinal movement along a certain path (straight line). The size (width) of the guiding slot is usually chosen to be slightly larger as compared to the size (diameter) of the latching pin. This way, a good guiding effect may be provided, while a certain play is present, allowing for manufacturing variations and/or reduced friction between the latching pin and the sidewalls of the guiding slot.

It is to be noted that the female fluid connector may be designed in a way that the latching member/latching pin is mechanically biased in a direction toward a latching position. This can be realised by elastic members, like mechanical springs, rubber material or the like. In particular it is also possible that the latching pins are designed as some kind of U-shaped members, where the arms of the U-shaped members will be pushed together by the elastic properties of the so-to-say base part of the U-shaped member of the latching pin. This way, the latching property of the latching pin can be provided in an easy, cheap and efficient way.

The female fluid connector may comprise at least two latching pins and/or guiding slots and/or may comprise symmetrically arranged latching pins and/or guiding slots. This way, predominant directions (in particular in a tangential/radial direction) of the quick connecting and disconnecting fluid coupling may be advantageously avoided. As an example, it can be avoided that a tangential/radial force (due to vibrational forces or bending forces induced by a hose that is connected to the fluid coupling) that leads to a disconnection of the quick connecting and disconnecting fluid coupling may be largely different in various directions. This is typically an advantageous feature of such a quick connecting and disconnecting fluid coupling.

Again, attention is directed to the possibility to provide some means for aiding a movement of at least one of the at least one latching pins aside. However, according to the present suggestion the female fluid connector it is usually designed and arranged in a way that this movement of at least one of the at least one latching pins is essentially only induced due to the irrespective inclined surface, in particular of the (inclined) contact pressure surface.

Furthermore, the female fluid connector may comprise at least one cover member, covering at least the area comprising the guiding slots and/or the latching members/latching pins (and therefore "indirectly" the contact pressure surface/the bulged part of the male fluid connector). This way, the guiding slots/latching members/latching pins are protected from external influences, so that the reliability of the arrangement can be enhanced. Further, external influences on the latching member/latching pin that may have an effect on the contact pressure force of the latching member/latching pin onto their contact pressure surface, and thus on the holding force that holds together the male fluid connector and the female fluid connector, may be advantageously reduced. The cover member may be provided in form of some kind of a sleeve like member. Further, some grip enhancing surface may be provided as well, to facilitate the handling of the respective part in a manual way (simply using the fingers).

The cover member may be designed and arranged in a way that it may not be moved in an axial direction with respect to the main housing of the female fluid connector. Then, a radial/circumferential movement may yet be possible. However, typically it is preferred if the cover member is fixedly attached to the main housing of the female fluid connector. This way, the wear and/or the degradation over time of the female fluid connector may be reduced. It is to be noted that with such a design the cover member is usually not able to assist an opening movement of at least one of the at least one latching pins (which is essentially a paradigmatic design consideration in fluid couplings according to the prior art). Thence, an opening movement of the latching pins may (essentially) only be effectuated by inclined surfaces of the corresponding fluid connector. In particular an inclined surface, more particular the (inclined) contact pressure surface of the corresponding male fluid connector, may be considered.

Even further (in particular additionally or alternatively), it is suggested to design and arrange the male fluid connector in a way that is intended to couple to a standard female fluid connector comprising at least one latching member, preferably at least one latching pin that is guided by a guiding slot, where the angle of the guiding slot and the angle of the contact pressure surface differ by at least 1° and/or by not more than 10°. Again, very good mechanical properties of the resulting quick connecting and disconnecting fluid coupling can be realised without significant disadvantageous effects. It is to be noted that as a lower limit and/or as an upper limit, different angles can be used as well, like (lower limit) 0.5°, 1.5°, 2°, 2.5°, 3°, 3.5°, 4°, 4.5° or 5° and/or (upper limit) 1.5°, 2°, 2.5°, 3°, 3.5°, 4°, 4.5°, 5°, 6°, 7°, 8° or 9°. Certainly, some combinations are not sensible, which is obvious to a person skilled in the art. This may also apply to other ranges, given in the present disclosure as well. Additionally or alternatively to the aforementioned differences in angle, it should be noted that preferably the angle of the guiding slot for the latching pin should usually be larger as compared to the angle of the contact pressure surface. However, for certain designs the contrary might be true as well.

Preferably, the male fluid connector is designed and arranged in a way that it comprises a fluid shut-off system. This way, a loss/spill of fluid is advantageously hindered/inhibited, even when the male fluid connector/female fluid connector/parts of the quick connecting and disconnecting fluid coupling is/are in the (fully) disconnected position. This is not only advantageous in that no fluid is lost. Instead, spilled fluid may cause short-circuits or other damage to the surroundings, which is of course to be avoided. The design principles for realising this functionality are well known to persons skilled in the art. In particular, so-called "flat face couplings", "flat face plugs" or the like are well known in the prior art.

Further it is suggested to design the male fluid connector in a way that it comprises a symmetrically arranged contact pressure surface and/or in a way that it comprises a symmetrically arranged inclined surface, preferably a single circumferentially arranged contact pressure surface and/or in a way that it comprises a single circumferentially arranged inclined surface. This way, it is in particular possible to connect the male fluid connector and the female fluid connector together irrespective of their relative angular position. Furthermore, the design of the male fluid connector may become comparatively simple.

Further, a quick connecting and disconnecting fluid coupling is suggested that comprises a male fluid connector and a female fluid connector, wherein the male fluid connector is designed and arranged as a male fluid connector according to the present disclosure. This way, the quick connecting and disconnecting fluid coupling can show the same features and advantages as the male fluid connector, at least in analogy. Further, the quick connecting and disconnecting fluid coupling can be modified at least analogously to the suggested modifications of the male fluid connector.

**In** particular, it is suggested that the quick connecting and disconnecting fluid coupling is designed and arranged in a way that the female connector is a standard female fluid connector comprising a latching member, preferably a latching pin that is guided by a guiding slot, wherein the guiding slot is arranged at a 45° angle.

Further (in particular additionally or alternatively), the quick connecting and disconnecting fluid coupling may be designed and arranged in a way that the angle of the guiding slot of the female connector and the angle of the contact pressure surface of the male connector differ by at least 1° and/or by not more than 10°. A particular reference is made to alternative angles, already given above.

Even further, it is suggested to design the quick connecting and disconnecting fluid coupling in a way that the male fluid connector and/or the female fluid connector and/or the quick connecting and disconnecting fluid coupling is designed and arranged as a fluid shut-off device. Reference is made to the already given discussion.

Yet further, it is suggested to design the quick connecting and disconnecting fluid coupling in a way that the female fluid connector comprises at least one cover member, covering at least the area comprising the guiding slots and/or latching pins. The advantages of this embodiment have already been mentioned.

Further advantages, features, and objects of the invention will be apparent from the following detailed description of the invention in conjunction with the associated drawings, wherein the drawings show:
- Fig. 1:: a schematic cross-section of a possible embodiment of a quick connecting and disconnecting fluid coupling, comprising a female fluid connector and a male fluid connector in a fully disconnected state;
- Fig. 2:: a schematic cross-section of the possible embodiment of a quick connecting and disconnecting fluid coupling according to Fig. 1 in a fully coupled state;
- Fig. 3:: a schematic top view onto the housing member of the quick connecting and disconnecting fluid coupling according to Figs. 1 and 2.

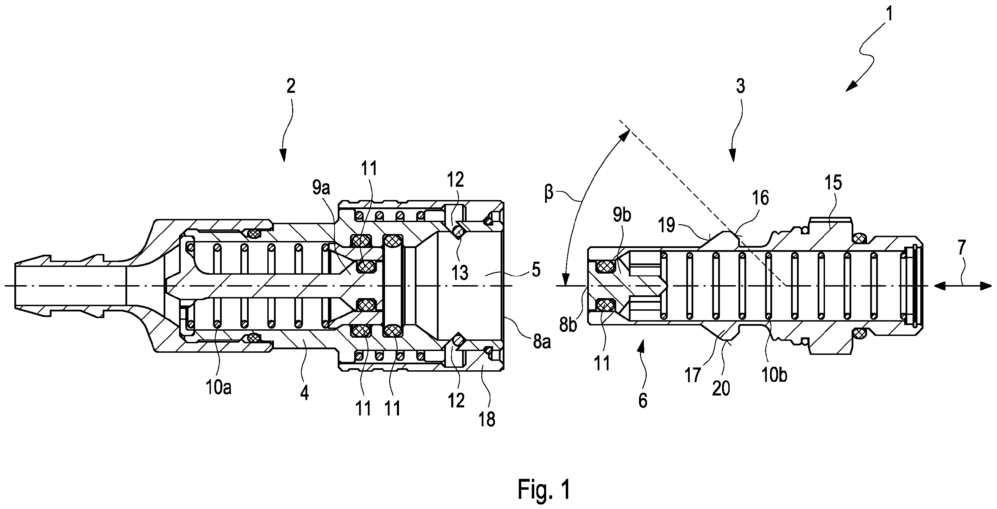

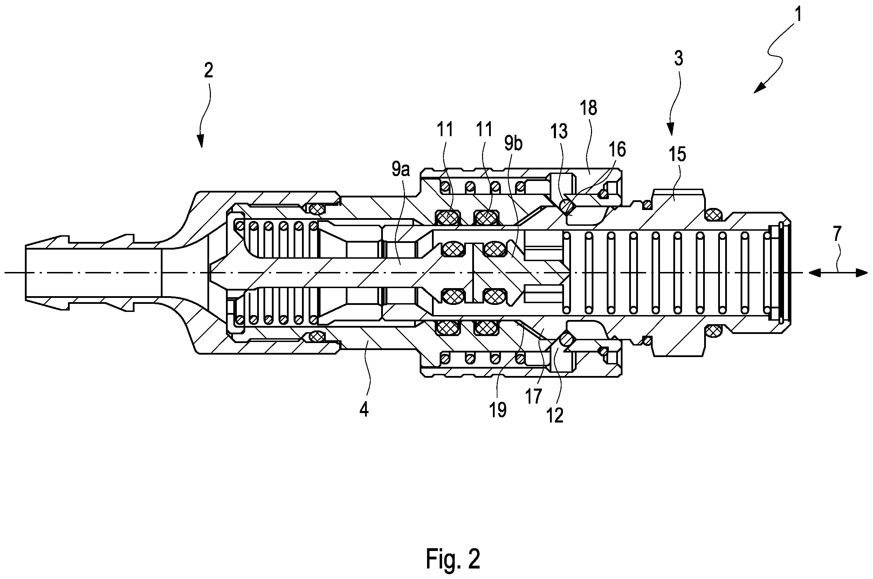

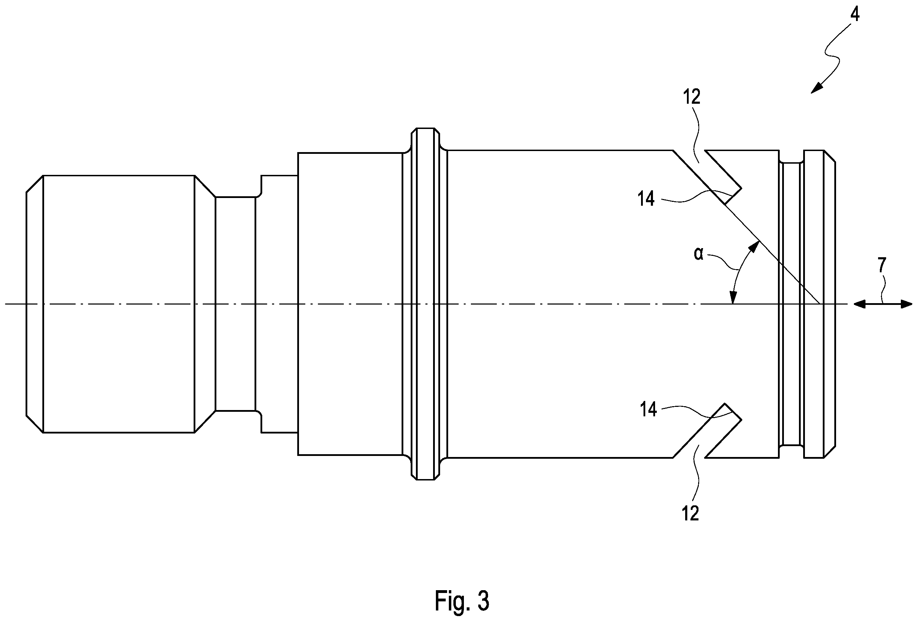

Fig. 1 shows a schematic cross-section of a quick connecting and disconnecting fluid coupling 1 according to the present disclosure in a fully disconnected position. The quick connecting and disconnecting coupling 1 comprises a female fluid connector 2 and a male fluid connector 3. The female fluid connector 2 comprises a housing 4 (base housing) with an inner recess 5 into which the protruding part 6 of the male fluid connector 3 can be inserted (connected/coupled position, see Fig. 2). More details of the design of the housing 4 can also been deferred from Fig. 3, where the housing 4 is shown without any additional parts, and further in a schematic top view (as opposed to Figs. 1 and 2, where additional parts are mounted to the female fluid connector 2, and where a schematic cross-section is depicted).

As can be seen from the Figs., the quick connecting and disconnecting coupling 1 and its respective subassembly parts (at least the majority thereof) are designed to be essentially rotationally symmetric around an axial direction 7 that is shown by a double-headed arrow in the Figs.. The majority of the parts further show a distinct lengthwise extent in the direction of the axial direction 7, as it is normal for quick connecting and disconnecting couplings 1.

As can be seen from the Figs., the quick connecting and disconnecting coupling 1 is designed as a fluid shut-off system. Therefore, the fluid flow through the end surfaces 8a, 8b of the female fluid connector 2 and of the male fluid connector 3 is inhibited by mechanically biased valve members 9a, 9b in a disconnected state, as it is known as such in the prior art. The valve members 9a, 9b are mechanically biased in their sealing positions by respective mechanical springs 10a, 10b, as it is also known in the prior art. In the coupled position of the quick connecting and disconnecting coupling 1 (see Fig. 2) the valve members 9a, 9b are moved out of their fluid blocking positions and a fluid throughput flow through the end surfaces 8a, 8b of the female fluid connector 2 and the male fluid connector 3, and therefore through the quick connecting and disconnecting coupling 1 is allowed. This way an easy operation of the quick connecting and disconnecting coupling 1 is possible, while at the same time a spill of fluid in the disconnected state of the quick connecting and disconnecting coupling 1 is avoided.

Only for completeness, it is to be noted that in the presently shown embodiment of the quick connecting and disconnecting coupling 1 a plurality of O-rings 11 is provided to effectuate a fluid-tight sealing effect. The O-rings can be made out of a suitable material, like rubber or silicone. The details thereof are well-known and obvious to a person skilled in the art.

The housing for the female fluid connector 2 further comprises presently two positions along the outer circumference of the essentially cylindrically shaped housing 4, where guiding slots 12 are provided. In the guiding slots 12, a respective latching pin 13 is arranged. The latching pin 13 can move along the lengthwise extent of the groove 12, i.e. along a straight path. In the direction towards the inside of the housing 4, i.e. towards recess 5 of the housing 4, the movability of the latching pin 13 is limited by respective end surfaces 14 of the guiding slots 12. These end surfaces 14 serve as a mechanical limiter for the movement of the latching pin 13. The dimensions of the latching pin 13 and the guiding slots 12 (width/thickness/diameter) are chosen to be corresponding to each other. In particular, a slight play is foreseen to reduce friction; nevertheless, the allowed movement of the latching pin 13 is essentially limited to a movement in the direction of the guiding slot 13 (in other words: essentially no side movement is allowed).

The end surfaces 14 are placed in such a way that in the innermost position of the latching pins 13, about half of the height (thickness/diameter) of the latching pin 13 is located inside of the recess 5 of the housing 4, while the other half is, as seen in the sense of a line of sight, inside of the wall of the housing 4. As a matter of completeness, the latching pins 13 are typically mechanically biased to move into the innermost position (contact between the end surfaces 14 of the guiding slots 12 and the latching pins 13 established) as it is shown in Figs. 1 and 2.

In the present embodiment, the angle *α* that encloses the axial direction 7 and the direction of the guiding slots 12 is chosen to be 45°. This angle is used in quick connecting and disconnecting couplings 1/female fluid connectors 2, as they are known and widely employed in the prior art.

To establish a fluid connection between the female fluid connector 2 and the male fluid connector 3, the respective parts 2, 3 are simply pushed together. The protruding part 6 of the male fluid connector 3 will hence enter the recess 5 of the female fluid connector 2. At a certain point, the latching pins 13 will come into contact with inclined surfaces 19 that are arranged along the bulged part 17 along the outer circumference of the housing 15 of the male fluid connector 3. It is to be noted that the rotational symmetry of the arrangement may be (and usually will be) broken by the latching pins 13 and/or the guiding slots 13. Contrary to this, the inclined surfaces 19, the flat ring-like surface 20, the contact pressure surfaces 16 and/or the bulged part 17 may be designed to be rotationally symmetric, for example in form of a double (and opposedly directed) partial cone/partial truncated cone.

During the coupling movement, after an initial contact between the latching pins 13 and the inclined surface 19 is established, a further movement of pushing together the female fluid connector 2 and the male fluid connector 3 will cause the latching pins 13 to move outward within their respective guiding slot 12, thus giving way to the respective bulged part 17 of the housing 15 of male fluid connector 3. Then, the latching pin 13 will reach is furthest displacement from the central axis, when it glides along the flat ring-like surface 20 of the bulged part 17 of the housing 15 of the male fluid connector 3.

Finally, the latching pin 13 will eventually have so-to-say passed the furthest protruding section of bulged part 17 of housing 15 (i.e. the ring-like surface 20). Now, the mechanical biasing of the latching pins 13 will cause latching pins 13 to move inward along the (rearward) contact pressure surfaces 16 of the bulging part 17 of housing 15. Additionally or alternatively, (one side surface of) the guiding slot 12 may (help to) push the latching pin 13 toward its latching position. Finally, the (fully) connected position of the quick connecting and disconnecting coupling 1 is reached, as it is shown in Fig. 2. Here, the female fluid connector 2 and the male fluid connector 3 are held together in a latching state that is realised by the latching pins 13 that are pressing onto the contact pressure surface 16. In a way, one can say that this latching position according to Fig. 2 is a partial force fit connection and a partial positive form locking connection.

The angle *β* that is enclosed between the contact pressure surface 16 and the axial direction 7 of the male fluid connector 3/the quick connecting and disconnecting coupling 1 is presently chosen to be 44°. This is slightly smaller than the current paradigmatic angle *β* of 45° that is used in quick connecting and disconnecting couplings 1/male fluid connectors 3, as they are known and widely employed in the prior art. In particular, in the present embodiment the angle *α* is larger than the angle *β*, usually irrespective of the exact angle chosen.

While this minuscule change of angle *β* seems to be irrelevant, the contrary is the case. Indeed, as can be seen from Table 1, the force that is necessary to disconnect the two parts 2, 3 of the connected quick connecting and disconnecting coupling 1 can be reduced significantly, while the quick connecting and disconnecting coupling 1 is still sufficiently resilient against an unintended disconnection or the like. This will be elucidated further on.

This latching mechanism of the quick connecting and disconnecting coupling 1 provides a sufficiently large latching force so that an unwanted disconnection of the two connector parts 2, 3 is essentially avoided.

To effectuate a (wanted) disconnection of the connector parts 2, 3 of the quick connecting and disconnecting coupling 1, the female fluid connector 2 and the male fluid connector 3 simply have to be pulled apart by an appropriate force, in particular in case the "pulling only disconnection method" used. Then, the angle *β* of the contact pressure surface 16 will - in combination with the guiding slot 12 of the housing 4 of the female fluid connector 2 - cause the latching pin 13 to move in an outward direction (in Fig. 2 in a partially leftward and partially upward direction for the upper latching pin 13, and in a partially leftward and partially downward direction for the lower latching pin 13), again giving way for the bulging part 17 of the housing 15 of male fluid connector 3.

However, a disconnection of the two connector parts 2, 3 of the quick connecting and disconnecting coupling 1 may also be effectuated by pushing the female fluid connector 2 towards the male fluid connector 3 in a first step, and then to pull the female fluid connector 2 away from the male fluid connector 3 in a second step ("push-pull disconnection method"). Here, (one side surface of) the guiding slot 12 may help in initially displacing the latching pins 13 in a radially outward direction for a certain, possibly comparatively small distance, so that the consequent pulling force that is required to further displace the latching pins 13 in a radially outward direction (so as to clear the way for the bulged part 17 to pass through the resulting opening of the latching pins 13) becomes smaller.

For completeness it should be mentioned that in the presently shown embodiment the opening movement of the latching pins 13 is essentially only effectuated by an inclined surface. In particular, this relates to the inclined surface 19 of the bulged part 17 during a coupling movement of the two connector parts 2, 3. Additionally, it relates to the inclined contact pressure surface 16 of the bulged part 17 during an uncoupling movement of the two connector parts 2, 3.

To protect the movable parts of the female fluid connector 2, and in particular the latching pins 13 within the guiding slots 12, a protection sleeve 18 is provided for female fluid connector 2. In the presently shown embodiment, the protection sleeve 18 shows a section with a corrugated surface, so that it is easy to grip with bare fingers. Furthermore, the protection sleeve 18 is fixedly attached to the main housing 4 of the female fluid connector 2. This can be done by glueing, welding, soldering or any other suitable fixation technique that is known in the prior art.

Since in industrial applications using the presently suggested quick connecting and disconnecting coupling 1, a closing and/or opening movement does not only occur once, but usually several hundred times, the forces that are required to connect and/or to disconnect the coupling 1 are an important point to be considered. Just as an example, if a technician at a data center with liquid cooled computing components has to remove all fluid connections of a single computer rack, he usually has to perform a hundred or even more fluid connection/disconnection activities. And this is required for only a single computer rack. Therefore, the required disconnecting force is actually an important point for work safety considerations due to the very repetitive nature of fluid connection/fluid disconnection actions.

With quick connecting and disconnecting fluid couples according to the state of the art, the disconnecting forces that are required are usually around 45 to 50 N.

When using the presently suggested angles, is very surprising to see that an only minuscule change of (some of) the angles will result in a surprisingly large reduction of the required disconnecting force (using the "pulling only disconnection method"). Even a single degree of offset accounts for a reduction of the disconnecting force by some 35%. This was confirmed by performing measurements using experimental test samples of the presently disclosed device. Nevertheless, the resulting quick connecting and disconnecting coupling 1 is still highly resilient against an inadvertent disconnection of the female fluid connector 2 and of the male fluid connected 3.

Experimental results are shown in Table 1 for various angles.

**Table 1**

| slot angle *α* (degree) | pressure condition (bar) | force to disconnect (N) | reduction in force to disconnect |
|---|---|---|---|
| 45 | 5 | 44 | |
| 40 | 5 | 28 | 36% |
| 35 | 5 | 19 | 32% |

It is to be noted that a single one or a plurality of the features of one, several or all of the presently disclosed detailed embodiments may be used in combination with the generic description of the present disclosure.

Additional information is disclosed in the two applications that are filed on the very same date by the same applicant under applicant's reference numerals DAN2401INDEEP (PA18153EP1), claiming priority of Indian Patent Application IN 202411018475, filed on 14 March 2024, and of German patent application DE 10 2024 111 733.8, filed on 25 April 2024; and DAN2403INDEEP (PA18161EP01), claiming priorities of Indian Patent Application IN 202411018474, filed on 14 March 2024, and of German patent application DE 2024 111 734.6, filed on 25 April 2024. The disclosure of such applications is deemed to be fully contained within the present application document.

## Claims

1. Male fluid connector (3) for a quick connecting and disconnecting fluid coupling (1), the male fluid connector (3) comprising:
a housing (15) with at least an axially arranged section that is designed and arranged to be received by an axially arranged inner recess (5) of the female fluid connector (2) of the quick connecting and disconnecting fluid coupling (1);
a contact pressure surface (16) that is arranged at an angle with respect to the axial direction (7) of the axially arranged section of the housing (15) of the male fluid connector, and that is designed and arranged to be engaged behind by a latching member (13) of the female fluid connector (2) in a latching position (Fig. 2) so as to reversibly fixate the male fluid connector (3) inside the female fluid connector (2) of the quick connecting and disconnecting fluid coupling (1),
**characterized in that** the angle (*β*) that is enclosed by the direction of the contact pressure surface (16) and the axial direction (7) is smaller than 44.5°, preferably smaller than 44°.

2. Male fluid connector (3) according to claim 1, **characterised in that** the angle (*β*) that is enclosed by the direction of the contact pressure surface (16) and the axial direction (7) is larger than 30°, preferably larger than 35°, more preferred larger than 40°, even more preferred larger than 43°.

3. Male fluid connector (3) according to claim 1 or 2, **characterised in that** the contact pressure surface (16) is provided by a bulged part (17) of the housing (15), and preferably the bulged part (17) further comprises an inclined surface (19) opposite of the contact pressure surface (16).

4. Male fluid connector (3) according to any of the preceding claims, **characterised in that** the male fluid connector (3) is designed and arranged to couple to a standard female fluid connector (2) comprising a latching member (13), preferably a latching pin (13) that is guided by a guiding slot (12), wherein the guiding slot (12) is arranged at a 45° angle (*α*).

5. Male fluid connector (3) according to any of the preceding claims, **characterised in that** the female fluid connector (2) is designed and arranged to couple to a standard female fluid connector (2) comprising at least a latching member (13), preferably at least a latching pin (13) that is guided by a guiding slot (12), where the angle (*α*) of the guiding slot (12) and the angle (*β*) of the contact pressure surface (16) differ by at least 1° and/or by not more than 10°.

6. Male fluid connector (3) according to any of the preceding claims, **characterised in that** it comprises a fluid shut-off system (9a).

7. Male fluid connector (3) according to any of the preceding claims, preferably according to any of claims of 3 to 6, **characterised by** a symmetrically arranged contact pressure surface (16) and/or by a symmetrically arranged inclined surface (19), preferably by a single circumferentially arranged contact pressure surface and/or by a single circumferentially arranged inclined surface (19).

8. Quick connecting and disconnecting fluid coupling (1), comprising a female fluid connector (2) and a male fluid connector (3), **characterised in that** the male fluid connector (3) is designed and arranged as a male fluid connector (3) according to any of claims 1 to 7.

9. Quick connecting and disconnecting fluid coupling (1) according to claim 9, **characterised in that** female connector (3) is a standard female fluid connector (2) comprising a latching member (13), preferably a latching pin (13) that is guided by a guiding slot (12), wherein the guiding slot (12) is arranged at a 45° angle (α).

10. Quick connecting and disconnecting fluid coupling (1) according to claim 8 or 9, **characterised in that** the angle (*α*) of the guiding slot (12) of the female connector (2) and the angle (*β*) of the contact pressure surface (16) of the male connector (3) differ by at least 1° and/or by not more than 10°.

11. Quick connecting and disconnecting fluid coupling (1) according to any of claims 8 to 10, **characterised in that** the male fluid connector (3) and/or the female fluid connector (2) and/or the quick connecting and disconnecting fluid coupling (1) is designed and arranged as a fluid shut-off device (9a, 9b).

12. Quick connecting and disconnecting fluid coupling (1) according to any of claims 8 to 11, **characterised in that** the female fluid connector (2) comprises at least one cover member (18), covering at least the area comprising the guiding slots (13) and/or latching pins (12).
